# EUROPEAN PATENT SPECIFICATION

(11) **EP 3 561 174 B1**
(45) Date of publication and mention of the grant of the patent: **12.02.2025**
(21) Application number: 19171128.2
(22) Date of filing: 25.04.2019
(51) Int. Cl.: D06F 58/20

(54) **INSTALLATION AND METHOD FOR DRYING LAUNDRY**
INSTALLATION UND VERFAHREN ZUM TROCKNEN VON WÄSCHE
INSTALLATION ET PROCÉDÉ DE SÉCHAGE DE LINGE

(30) Priority: 25.04.2018 NL 2020825
(43) Date of publication of application: 30.10.2019
(73) Proprietor: Technisch Bureau Reinders B.V., 9461 VC Gieten (NL)
(72) Inventor: POETH, Philip Gerard Hendrik, 6211 JM Maastricht (NL); KLATTER, Henk, 9611 DK Sappemeer (NL); REINDERS, Jakob Hendrik, 9461 VC Gieten (NL)
(74) Representative: Patentwerk B.V.

(56) References cited:
- EP-A2- 0 049 170
- DE-A1- 19 954 234
- FR-A- 460 846
- JP-A- 2014 050 642
- US-A- 5 755 041
- US-A1- 2013 239 433

## Description

The invention relates to a system comprising an installation for interaction with at least one industrial textile dryer for laundry and at least one industrial textile dryer coupled to the installation. The invention further relates to a method for drying laundry through the use of a system according to the invention.

In industrial laundries, textile (laundry), after having been washed, is dried in an industrial tumble dryer. The tumble dryer can here be heated by means of combustion of gases or by means of steam, wherein, during the drying of the textile, a part of the drying air (process air) is recirculated in the dryer. The degree of recirculation is determined by a regulable recirculation valve, wherein a part of the drying air which is not recirculated is evacuated. The recirculating fraction of the drying air is generally heated to a predefined temperature before the drying air is once more conducted along and/or through the dry textile. Depending on the type of industrial tumble dryer, the (pre-)heating of the drying air can be realized, for example, by conducting the drying air through a gas combustion chamber and/or a heat exchanger, such as a steam heat exchanger. The capacity of the gas combustion chamber and/or the heat exchanger can generally be regulated, which is also referred to as modulation. The respectively renewed reheating of the recirculating drying air costs a relatively large amount of energy, and since, in industrial laundries, a plurality of industrial tumble dryers are generally used simultaneously, the absolute energy use of such laundries is significant. There is a need to reduce the energy use of industrial dryers per se, without harming the efficiency of the drying process.

An example of a system according to the prior art is described in FR-A-460 846, which is directed to an arrangement for drying linen, fabrics, linen or fabric waste and other materials which are treated by the use of, instead of hot air, combustion of a generator hearth, generally the one used for the generator used to produce the motive power of the factory.

DE-A-199 54 234 describes a method for drying damp bulk material by contacting with a temperature controlled mixture of a heated gas and a secondary gas.

A first object of the invention is to provide an improved solution for reducing the energy consumption of at least one industrial tumble dryer per se.

A second object of the invention is to provide an improved solution for reducing the energy consumption of at least one industrial tumble dryer per se, without harming the efficiency of the tumble dryer.

A third object of the invention is to provide an improved solution for reducing the energy consumption of at least one industrial tumble dryer per se, wherein the efficiency of the tumble dryer can be improved.

In order to achieve at least one of the aforementioned objects, the invention provides a system comprising an installation for interaction with at least one industrial textile dryer for laundry, and at least one industrial textile dryer coupled to the installation, wherein the textile dryer comprises: a treatment chamber for holding laundry, a process air heating device for heating process air to be conducted into the treatment chamber, and an air feed opening for sucking up air into the textile dryer, wherein the installation and/or the textile dryer comprises at least one primary temperature sensor for measuring the temperature of process air conducted through the textile dryer and/or the temperature of the laundry, the installation further comprising: at least one air feed device for feeding feed air to the air feed opening of at least one textile dryer, comprising at least one outlet connected to the air feed opening of the textile dryer, a first feed line for feeding combustion gases produced by a gas turbine, at a first temperature, in the direction of the at least one outlet, a second feed line for feeding ambient air, at a second temperature, in the direction of the at least one outlet, a regulating mechanism for regulating the quantity of combustion gases, and/or ambient air, to be conducted as feed air via the at least one outlet to the feed opening, a first secondary temperature sensor for measuring the temperature of feed air to be conducted via the outlet into the feed opening; and at least one external control unit arranged to determine a desired temperature of feed air and to regulate the temperature of the feed air by activating the regulating mechanism, on the basis of the temperature measured by the at least one primary temperature sensor, and/or the current heating capacity of the process air heating device, and preferably arranged to check the current temperature of the feed air by comparing this current temperature of the feed air, measured by the first secondary temperature sensor, with the desired temperature of the feed air, determined by the external control unit, and wherein the external control unit is preferably further arranged to readjust the regulating mechanism whenever a predefined maximum temperature difference between the desired temperature of the feed air and the measured temperature of the feed air is exceeded. A particular advantage of the installation according to the invention is that the combustion gases of an (external) gas turbine are used to heat process air to be conducted into the treatment chamber, wherein an intelligent control unit is used to, on the basis of diverse measured temperatures and/or the current heating capacity, regulate the flow of diverse air streams, whereby, finally, process air can be conducted at a desired temperature into the treatment chamber. Because an external heated air stream, constituted by the combustion gases, is conducted into the dryer, the process air heating device of the industrial dryer will need to additionally heat significantly less intensively, whereby the energy use of the textile dryer per se can also be significantly reduced. An additional advantage, where the process air heating device is gas-fired, is that less (harmful) combustion gases will be generated, which is favourable from an environmental technology viewpoint. The gas turbine is in an industrial laundry generally placed at a distance from the at least one industrial textile dryer. The gas turbine is used in an industrial laundry, of which the installation according to the invention can form part, to generate electrical energy by the combustion of fuel, wherein the electrical energy is used to drive one or more components installed in the laundry, including, for example, washing machines and tumble dryers. The heat released in this combustion of fuel (residual heat) is usefully employed in the installation according to the invention by conducting it via the at least one first feed line into at least one textile dryer. The combustion gases produced by the gas turbine can be fed unfiltered as feed air to the textile dryer. Especially where relatively environmentally friendly fuels, such as hydrogen or natural gas (methane), are used in the gas turbine, the combustion gases (carbon dioxide and water vapour) will be relatively unharmful and can therefore be conducted directly (unfiltered) into the textile dryer. It is, however, nevertheless conceivable that the combustion gases can be filtered before they are conducted into the textile dryer. The relatively cold ambient air fed via the second feed line (possibly) to the textile dryer is used to bring down the possibly relatively high temperature of the combustion gases before this mixture is conducted as feed air into the textile dryer. It is not necessary, and generally not desirable, to preheat the sucked-up ambient air separately before it is mixed with the combustion gases and/or before it is conducted directly into the textile dryer. The ambient air can herein be constituted by both outdoor air and indoor air. It is also possible for the ambient air to be constituted by a combination of outdoor air and indoor air. The external control unit of the installation according to the invention can be constituted by a control unit which forms part of at least one dryer. The external control unit can herein activate and/or monitor the at least one dryer, and/or the external control unit can interact (communicate) with the at least dryer. However, the installation according to the invention generally comprises at least one separate control unit, which possibly, and preferably, interacts (communicates) with a control unit of one or more dryers. It is here conceivable that the external control unit of the installation reads out, and/or takes delivery of, data from the internal control unit of one or more dryers. Finally, at least one external control unit has to be provided with one or more input signals on the basis of the temperature value(s) collected by at least one primary temperature sensor and/or the first secondary temperature sensor and/or the current heating capacity of the process air heating device, whereby the external control unit can determine the desired temperature of feed air and can regulate the temperature of the feed air by activating the regulating mechanism. The temperature value(s) collected by at least one primary temperature sensor, the temperature value(s) collected by the first secondary temperature sensor, and the current heating capacity of the process air heating device can lead to separate input signals, which are separately fed to the external control unit. It is further conceivable that the separate input signals are transmitted as a single composite input signal to the external input signal. The generation of the composite input signal can possibly be realized by means of an internal control unit of the dryer (should the internal control unit of the dryer be designed or - via reprogramming - set up for this purpose). It is further conceivable that one or more input signals are processed and/or are transformed, for example by means of an algorithm and/or a digital filter, before the one or more processed and/or transformed input signal(s) is/are transmitted to the external control unit. The processing and/or transformation can possibly be realized by means of the internal control unit of the dryer (should the internal control unit of the dryer be designed or - via reprogramming - set up for this purpose). It is further conceivable that the external control unit is arranged to process and/or transform one or more received input signals, in order, for example, to be able to determine (calculate) the desired temperature of the feed air. The determination of the desired temperature of the feed air on the basis of temperature value(s) and/or the current heating capacity of the process air heating device can thus be realized both directly and indirectly. It is conceivable that the desired temperature of the feed air, determined and/or calculated by the external control unit, is expressed as a concrete temperature value, for example 200° Celsius, and/or as a temperature range, for example between 180 and 220° Celsius. The laundry which can be dried by means of the textile dryer can be very diverse in nature, and can be constituted, for example, by table linen, bed linen or other kinds of bedding, towels, bath linen, clothing, and other kinds of textile. Generally, this laundry will derive from establishments such as hospitals, hotels, and restaurants. The external control unit initially forms no part of the internal control unit which forms a standard part of the dryer. The external control unit is prima facie a separate control unit, which, during installation of the installation according to the invention, can be coupled to the dryer, in particular to the internal control unit of the dryer. It is conceivable that, during installation of the installation according to the invention, the external control unit is at least partially integrated with the internal control unit of at least one dryer, for example by reprogramming of the internal control unit of the at least one dryer. It is further conceivable that the external control unit remains a separate control unit with respect to the internal control unit of the at least one dryer, wherein the external control unit will generally be coupled to the at least one internal control unit. This coupling can be of wired and/or wireless configuration. The external control unit can be physically fitted to or into the dryer during installation of the installation according to the invention. However, it is also conceivable that the external control unit is positioned at a distance from the dryer(s).

The feed lines which are used can be diverse in nature, and can possibly be of insulated configuration. It is herein in particular advantageous if the first feed line is of insulated configuration in order to, as far as possible, prevent loss of usefully employable residual heat which is transported by the combustion gases. The installation according to the invention is arranged to interact with at least one gas turbine and at least one industrial textile dryer. The gas turbine and the textile dryer therefore form no part of the installation according to the invention. It is nonetheless conceivable that the external control unit of the installation is installed in a dryer. Moreover, the external control unit of the installation according to the invention should interact with the various temperature sensors. The primary temperature sensor can herein form part both of the installation and of the textile dryer. The treatment chamber can be constituted by, for example, an axially rotatable (drying) drum. However, it is also conceivable that the textile dryer is constituted by a finisher, wherein laundry is present in a stationary, preferably substantially closed-off, treatment chamber, or is conducted by means of a transport system through a stationary treatment chamber. The checking (verification) of the current temperature of the feed air by comparing this current temperature measured by the first secondary temperature sensor with the desired temperature of feed air, determined by the external control unit, can be beneficial to the reliability of the system. In this way, it is possible to verify whether the quantity of combustion gases, and/or ambient air, to be conducted as feed air via the at least one outlet to the feed opening is correctly regulated by the regulating mechanism. Preferably, the external control unit is further arranged to readjust the regulating mechanism whenever a predefined maximum temperature difference between the desired temperature and the measured temperature is exceeded, whereby a self-regulating system is created. The desired predefined maximum temperature difference is dependent on several factors. The maximally admissible temperature difference is, for example, dependent on the current phase in which the drying process is found. The predefined maximum temperature difference will maximally amount to, for example, 60 degrees Celsius or maximally 50, 40, 30, 20, 10 or 5 degrees Celsius. In one possible design variant, a first primary temperature sensor is arranged to measure the temperature of process air conducted out of the treatment chamber. The process air conducted out of the treatment chamber is the process air which has already in the treatment chamber been in contact with the laundry to be dried.

It is possible that a second primary temperature sensor is arranged to jointly measure the temperature of process air to be conducted into the treatment chamber. The external control unit can here be arranged to interact with the second primary temperature sensor for checking the temperature of process air conducted into the treatment chamber. Although the desired temperature of the process air to be conducted into the treatment chamber is determined by regulating the quantity of feed air conducted into the dryer, at a temperature x, the quantity of process air conducted out of the treatment chamber, at a temperature y, and the quantity of process air to be conducted into the treatment chamber, at a desired temperature (range) z, it is generally desirable to verify that the desired inlet temperature (range) z is also actually realized. Should it be established, with the aid of a measurement by the second primary temperature sensor, that the temperature of the process air to be conducted into the treatment chamber is too high or too low, because the temperature falls outside a predefined temperature range z, then the temperature of the process air to be conducted into the treatment chamber can be adapted by activating the regulating mechanism with the aid of the control unit of the installation according to the invention. Generally, the desired temperature of the process air to be conducted into the treatment chamber will be determined by, on the basis of the quantity of process air conducted out of the treatment chamber, at a temperature y, calculating the required quantity of feed air conducted into the dryer, at a desired temperature x, on the basis of which the regulating mechanism is activated in order to produce feed air at the desired temperature x. The quantity of feed air to be conducted into the dryer, at the desired temperature x, can further be regulated by means of the aforementioned (temperature) regulating mechanism and/or can be regulated differently, for example by use of a separate (quantity) regulating mechanism, generally positioned downstream of the aforementioned (temperature) regulating mechanism. The flow of the feed air into the textile dryer can possibly be regulated. Finally, a desired flow of the process air to be conducted into the treatment chamber, at a desired temperature z, can hereby be realized.

A third primary temperature sensor can be arranged to measure the temperature of the laundry in the treatment chamber. The third primary temperature sensor can be constituted, for example, by an infrared sensor for measuring the temperature of the laundry.

The desired temperature of feed air can be determined on the basis of temperature measured by the first primary temperature sensor and/or temperature measured by the second primary temperature sensor, and/or by temperature measured by the third primary temperature sensor. The first, second and/or third primary temperature sensor can herein form part both of the installation and of the textile dryer. It is conceivable that at least one primary temperature sensor concerns an add-on temperature sensor, which is fitted to or onto the textile dryer. The add-on temperature sensor can also be referred to as the additional temperature sensor or as the external temperature sensor. The add-on temperature sensor can be fitted, for example, by means of mechanical fastening, to, into, or onto the dryer. An advantage hereof is that temperature data can be collected by the external control unit in a relatively simple manner, wherein interaction between the external control unit and an internal control unit of the textile dryer is not necessary. In addition, it is possible that, with an add-on temperature sensor, an additional checking step is carried out on a primary temperature sensor which forms part of the textile dryer.

In one possible design variant, the external control device is arranged to regulate, on the basis of the temperature of the feed air measured by at least one primary temperature sensor, the heating capacity of the process air heating device in order to achieve the desired temperature of process air to be conducted into the treatment chamber.

At least one textile dryer to which the installation can be connected preferably comprises an air vent for evacuating process air from the textile dryer, and wherein the textile dryer comprises an air recirculation mechanism, interacting with the air vent, for regulating the quantity of process air to be evacuated via the air vent and the quantity of process air to be recirculated into the dryer. Preferably, the control unit of the installation according to the invention is arranged to directly or indirectly (via another control unit) regulate the air recirculation mechanism. By means of the air recirculation mechanism, process air - generally already conducted through the treatment chamber and therefore relatively moist -can be evacuated from the dryer, and possibly after filtering, can be added to the atmosphere (ambient air). Generally, the selective evacuation of moist process air from the dryer is beneficial to the final drying process, because the remaining fraction of process air which is not evacuated is mixed with fresh (relatively dry) feed air, whereby the heat absorption capacity of the process air to be conducted into the treatment chamber is increased, which is generally beneficial to (the duration of) the drying process.

Generally, the first temperature of the combustion gases will be (much) higher than the second temperature of the ambient air. The second temperature will generally lie between 0 and 30 degrees Celsius. The first temperature will generally be higher than 100 degrees Celsius, in particular higher than 200 degrees Celsius, wherein the first temperature will in particular lie between 260 and 320 degrees Celsius, preferably between 280 and 300 degrees Celsius.

In a preferred embodiment, the installation comprises at least one second secondary temperature sensor for measuring the temperature of combustion gases guided through the first feed line. The second secondary temperature sensor is preferably arranged to communicate with the external control unit of the installation. Preferably, the installation comprises at least one third secondary temperature sensor for measuring the temperature of ambient air guided through the second feed line. The third secondary temperature sensor is preferably arranged to communicate with the control unit of the installation. Through the measurement of the temperature of the combustion gases directly in the first feed line and/or the temperature of the ambient air directly in the second feed line, the regulating mechanism can be more accurately activated, in particular with the aid of the control unit, for the realization of in the textile dryer feed air with a desired temperature. The regulating mechanism is therefore preferably arranged to regulate the composition of the feed air on the basis of the temperature measured by the second secondary temperature sensor and/or the temperature measured by the third secondary temperature sensor.

The regulating mechanism preferably comprises at least one shut-off valve operable by the external control unit. The shut-off valve can constitute a central shut-off valve, with the aid of which both the flow of the combustion gases through the first feed line and the flow of the ambient air through the second feed line can be regulated. It is further conceivable that one or more feed lines are provided with an own shut-off valve operable by the control unit. Moreover, from the textile dryer, generally by means of a fan of the textile dryer, a negative pressure is generally created in, or at least close to, the air feed opening of the dryer, whereby the combustion gases, as well as the ambient air, are sucked in the direction of the textile dryer.

The first feed line for combustion gases and the second feed line for ambient air can be connected via separate outlets to the air feed opening. However, it is generally preferable that the first feed line for combustion gases and the second feed line for ambient air are connected to a mixing chamber, wherein the mixing chamber is provided with one central outlet arranged for coupling to the feed opening of the textile dryer. Generally, this will not only be beneficial to the coupling of the installation, in particular the feed lines, to the textile dryer, but it further makes it easier to measure the temperature of the feed air relatively accurately by means of the first secondary temperature sensor.

It is conceivable that the installation comprises a plurality of air feed devices and one or more external control units, wherein the one or each external control unit is coupled to an air feed device for interaction with an (own) textile dryer. Such a configuration of the installation is especially intended for simultaneous interaction with a plurality of industrial textile dryers (in a laundry). The installation will herein generally be coupled to one gas turbine, although it is conceivable that the installation is simultaneously coupled to a plurality of gas turbines. It is conceivable that at least one air feed device is arranged for simultaneous interaction with a plurality of textile dryers. It is herein conceivable that the air feed device comprises a plurality of first feed lines and a plurality of second feed lines, wherein each assembly comprising a first feed line and a second feed line is arranged to interact with a separate textile dryer.

Preferably, the installation comprises at least one first air feed distribution line, which first air feed distribution line is arranged to connect to a gas turbine vent for combustion gases, and which first air feed distribution line is connected to at least one first feed line and preferably to a plurality of first feed lines. The first air feed distribution line therefore constitutes in this design variant a central line to which at least one, and preferably a plurality of first feed lines are connected. The air feed distribution line will herein generally be coupled to one gas turbine. However, it is also conceivable that the air feed distribution line is coupled to a plurality of gas turbines. By using an air feed distribution line which is connected to at least one, and preferably a plurality of first feed lines, it is possible that the device according to the present invention can simultaneously interaction with a plurality of textile dryers. It is advantageous if the device further comprises a plurality of second feed lines, wherein each second feed line is arranged to feed ambient air, at a second temperature, in the direction of at least one outlet. It is therefore possible that the device comprises at least one first air feed distribution line, which is arranged to connect to a gas turbine vent for combustion gases, wherein the first air feed distribution line is connected to a plurality of first feed lines, and wherein the device further comprises a plurality of second feed lines arranged for the supply of ambient air. Preferably, a first feed line forms a pair with a second feed line, wherein each pair is arranged to interact with a separate textile dryer. The drying process is therefore separate for each textile dryer and is relatively simple to regulate. In another advantageous design variant, it is conceivable that the device comprises a plurality of air feed devices for feeding feed air to the air feed opening of a textile dryer, wherein each air feed device comprises at least one outlet arranged to connect to the air feed opening of the textile dryer, a first feed line for feeding combustion gases produced by a gas turbine, at a first temperature, in the direction of the at least one outlet, wherein each first feed line is optionally connected to a first air feed distribution line, which is arranged to connect a gas turbine vent for combustion gases, a second feed line for feeding ambient air, at a second temperature, in the direction of the at least one outlet, a regulating mechanism for regulating the quantity of combustion gases, and/or ambient air, to be conducted as feed air via the at least one outlet to the feed opening, and a first secondary temperature sensor for measuring the temperature of feed air to be conducted via the outlet into the feed opening. The device is therefore arranged to interact with a plurality of textile dryers, wherein each air feed device is arranged to interact with a separate textile dryer. Preferably, the device comprises a same number of external control units (i.e. as the number of air feed devices), wherein each external control unit is arranged to determine a desired temperature of feed air and to regulate the temperature of the feed air by activating the regulating mechanism on the basis of the temperature measured by at least one primary temperature sensor, and/or the current heating capacity of the process air heating device, and preferably to check the current temperature of the feed air by comparing this current temperature measured by the first secondary temperature sensor with the desired feed air temperature determined by the external control unit, and preferably to readjust the regulating mechanism whenever a predefined maximum temperature difference between the desired temperature and the measured temperature is exceeded. Each air feed device can therefore be arranged to interact with a separate external control unit.

Preferably, the installation comprises at least one second air feed distribution line, which second air feed distribution line connects to the ambient air, and which second air feed distribution line is connected to at least one second feed line, and preferably to a plurality of second feed lines. The one or more air feed distribution lines constitute central lines (central pipes), to which one, though preferably a plurality of branches, in the form of the (first or second) feed lines are connected.

In a preferred embodiment of the installation according to the invention, at least one air feed device comprises at least one recirculation line for heat and/or (evacuation) air, which recirculation line, on the one hand, is arranged to connect to an air vent of a textile dryer and, on the other hand, is arranged to connect to at least one first feed line and/or to at least one second feed line. This makes it possible to bring heat, and/or (process) air, evacuated from the textile dryer back into the dryer via the first feed line and/or second feed line. It is herein generally advantageous the at least one recirculation line, with the interposition of at least one air-treating component, such as a dehumidifier and/or air filter, in particular a cyclone and/or a heat exchanger, is connected to at least one first feed line and/or to at least one second feed line. In the cyclone, the air can be stripped of dirt particles and therefore cleaned. The warm, cleaned evacuation air can subsequently be conducted through the heat exchanger, in which sucked-up ambient air can be heated. The cleaned and cooled evacuation air can be delivered to the environment.

Communication between the temperature sensors and the external control unit can be made by wired and/or wireless means, and can be realized directly or indirectly (with the interposition of one or more components). Especially where a temperature sensor is arranged for wireless communication, it is advantageous if the temperature sensor comprises a temperature transmitter for being able to send/communicate measured temperature values in the direction of the external control unit.

The invention further relates to an external control unit for use in an installation according to the invention. In a possible design variant, the external control unit is arranged to read out and or take delivery of data from an internal control unit of one or more textile dryers. The invention further relates to a system comprising plurality of industrial textile dryers coupled to the installation. The system preferably further comprises at least one gas turbine arranged for the generation of combustion gases, wherein the gas turbine is coupled to at least one air feed line, such that at least a part of the combustion gases can be conducted into at least one first feed line. A gas turbine with a power of 200kW is suitable, for example, for supplying sufficient combustion gas as feed air to 6 industrial textile dryers.

The invention additionally relates to a method for drying laundry, for example textile, through the use of a system according to the invention, comprising the steps: A) the measurement of the temperature of process air conducted through the textile dryer and/or the temperature of the laundry by means of at least one primary temperature sensor, and/or the observation of the current heating capacity of the process air heating device; B) the determination, by the external control unit of the installation, of the desired temperature of feed air to be sucked up through the textile dryer, on the basis of the temperature measured under step A) and/or the observed current heating capacity; C) the activation of the regulating mechanism by the external control unit of the installation, such that the temperature of the feed air to be sucked up through the textile dryer substantially conforms to the temperature determined during step B), wherein preferably the temperature of the feed air is measured by means of the first secondary temperature sensor; D) the sucking-up of feed air through the textile dryer via the air feed opening; and E) the feeding of the inbound process air to the treatment chamber of the textile dryer for the drying of the laundry. Instead of the feeding of fresh ambient air, it is likewise possible to re-feed treated evacuation air from the dryer. It is conceivable that, during step C), the at least one external control unit checks (verifies) the current temperature of the feed air by comparing this current temperature of the feed air, measured by the first secondary temperature sensor, with the desired temperature of the feed air, determined by the external control unit. It is additionally conceivable that, during step C), the at least one external control unit readjusts the regulating mechanism whenever a predefined maximum temperature difference between the desired temperature of the feed air and the measured temperature of the feed air is exceeded.

Advantages and design variants of the method according to the invention have already been extensively described above, and are further described in greater detail in the following description of the figures.

The invention will be explained on the basis of non-limitative illustrative embodiments represented in the following figures, in which:
Figure 1 shows a schematic representation of an assembly comprising a textile dryer and an installation according to the invention, in a first embodiment;
Figure 2 shows a schematic representation of an assembly comprising a textile dryer and an installation according to the invention, in a second embodiment;
Figure 3 shows a schematic representation of an installation according to the invention which interacts with a plurality of textile dryers and a gas turbine;
Figure 4 shows a graph in which several phases of a drying process are represented; and
Figure 5 shows a schematic representation of an assembly comprising a textile dryer and an installation according to the invention, in a third embodiment.

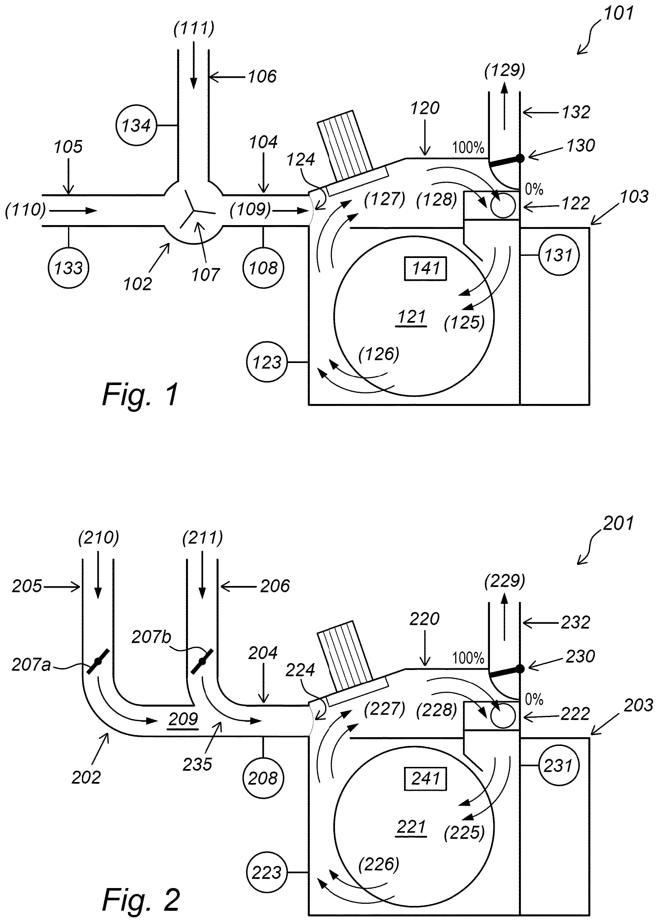

Figure 1 shows a schematic representation of an assembly comprising an industrial textile dryer (120) and a first embodiment of an installation (101) according to the invention. The textile dryer (120) comprises a treatment chamber (121) for holding laundry. In the shown design variant, the treatment chamber (121) concerns an axially rotatable drum (121) for holding laundry or textile (not shown). The textile dryer (120) further comprises a process air heating device (122) for heating process air (128, 125) to be conducted into the drum (121), a first primary temperature sensor (123) for measuring the temperature of process air (126) conducted out of the drum (121), a second primary temperature sensor (131) for measuring the temperature of process air (125) to be conducted into the drum (121), a third primary temperature sensor (141) for measuring the temperature of the laundry, an air feed opening (124) for sucking up air into the textile dryer (120), an air vent (132) for evacuating process air (129) from the dryer (120), and an air recirculation mechanism (130), interacting with the air vent (132), for regulating the quantity of process air (129) to be evacuated via the air vent (132) and the quantity of process air to be recirculated into the textile dryer (120). In the shown design variant, the third primary temperature sensor (141) comprises an infrared sensor (141) for measuring the temperature of the laundry in the drum (121). However, it is not necessary for the first primary temperature sensor (123) and/or the second primary temperature sensor (131) and/or the third primary temperature sensor (141) to form part of the textile dryer (120). The first primary temperature sensor (123) and/or the second primary temperature sensor (131) and/or the third primary temperature sensor (141) can also be fitted as an add-on to or onto the textile dryer (120). The installation (101) comprises an air feed device (102) for feeding feed air (109) to the air feed opening (124) of the textile dryer (120), and an external control unit (103), wherein the air feed opening (124) comprises an outlet (104), a first feed line (105), a second feed line (106), a regulating mechanism (107), and a first secondary temperature sensor (108). The outlet (104) of the air feed device (102) is connected to the air feed opening (124) of the textile dryer (120). The first feed line (105) is arranged to feed combustion gases (110) produced by a gas turbine (not shown), at a first temperature, in the direction of the at least one outlet (104). The second feed line (106) is arranged to feed ambient air (111), at a second temperature, in the direction of the at least one outlet (104). The regulating mechanism (107) comprises a shut-off valve (107), wherein the shut-off valve (107) is arranged to regulate the quantity of combustion gases (110) and/or ambient air (111) which is conducted in the direction of the outlet (104), in order to be added as feed air (109) to the feed opening (124) of the textile dryer (120). In the shown embodiment, the shut-off valve (107) comprises a Y-valve. The feed air (109) forms in the textile dryer (120), together with the process air (126) conducted out of the drum (121), a new stream of process air (127). In the shown embodiment, the air feed device (102) comprises three secondary temperature sensors (108, 133, 134). The first secondary temperature sensor (108) is arranged to measure the temperature of feed air (109) to be conducted via the outlet (104) into the feed opening (124) of the textile dryer (120). The second secondary temperature sensor (133) is arranged to measure the temperature of combustion gases (110) guided through the first feed line (105). The third secondary temperature sensor (134) is arranged to measure the temperature of ambient air (111) guided through the second feed line (106). The regulating mechanism (107) is arranged to regulate the composition of the feed air (109) on the basis of the temperature measured by the second secondary temperature sensor (133) and/or the temperature measured by the third secondary temperature sensor (134). The external control unit (103) is arranged determine a desired temperature of feed air and regulate the temperature of the feed air (109) by activating the regulating mechanism (107). The determination and regulation can be realized on the basis of the temperature (123, 131,141) measured by at least one primary temperature sensor, and/or the current heating capacity of the process air heating device (122), and/or the temperature measured by the first secondary temperature sensor (108). The external control unit (103) is arranged to interact with an internal control unit of the textile dryer (120). The external control unit (103) is further arranged to interact with the second primary temperature sensor (131), to activate the regulating mechanism (107), and preferably also to regulate the heating capacity of the process air heating device (122).

Figure 2 shows a representation of an assembly comprising a textile dryer (220) and a second embodiment of an installation (201) according to the invention. The textile dryer (220) comprises an axially rotatable drum (221) for holding laundry (not shown), a process air heating device (222) for heating process air (228) to be conducted into the drum (221), an air feed opening (224) for sucking up air into the textile dryer (220), an air vent (232) for evacuating process air (229) from the textile dryer (220), and an air recirculation mechanism (230), interacting with the air vent (232), for regulating the quantity of process air (229) to be evacuated via the air vent (232), and the quantity of process air to be recirculated into the textile dryer (220). The installation (201) comprises a first primary temperature sensor (223) for measuring the temperature of process air (226) conducted out of the drum (221), a second primary temperature sensor (231) for measuring the temperature of process air (225) to be conducted into the drum (221), a third primary temperature sensor (241) for measuring the temperature of the laundry. The installation (201) comprises an air feed device (202) for feeding feed air (209) to the air feed opening (224) of the textile dryer (220), and an external control unit (203), wherein the air feed opening (224) comprises an outlet (204), a first feed line (205), a second feed line (206), a regulating mechanism (207), and a first secondary temperature sensor (208). The first feed line (205) for the supply of combustion gases (210) and the second feed line (206) for the supply of ambient air (211) are connected to a mixing chamber (235), wherein the mixing chamber (235) is provided with one central outlet (204), which is coupled to the feed opening (224) of the textile dryer. The regulating mechanism (207a, 207b) comprises two shut-off valves (207a, 207b) operable by the external control unit (203). The first shut-off valve (207a) is herein accommodated in the first feed line (205), and the second shut-off valve (207b) is accommodated in the second feed line (206). For the shown device (201), the method for drying laundry is substantially equal to the method as described in Figure 1.

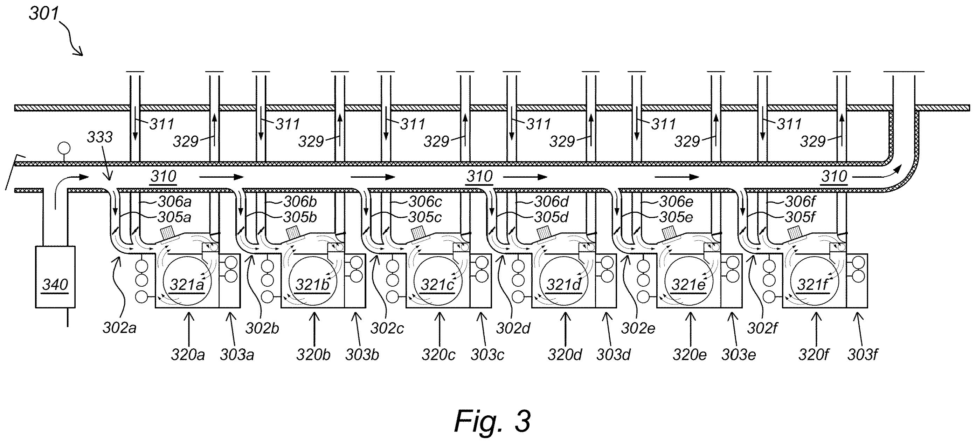

Figure 3 shows a schematic representation of the installation (301) according to the invention as shown in Figure 2, which interacts with a plurality of industrial textile dryers (320 a-f) and a gas turbine (340). The device (301) comprises six air feed devices (302 a-f), wherein each air feed device (302 a-f) is arranged to interact with one of the six control units (303 a-f). The gas turbine (340) is coupled to an air feed distribution line (333), which air feed distribution line (333) is subsequently coupled to a plurality of first feed lines (305 a-f) for feeding combustion gases (310) in the direction of the outlet of each air feed device (302 a-f). This (first) air feed distribution line (333) is connected to a gas turbine vent for combustion gases. The device (301) further comprises a plurality of second feed lines (306 a-f) for feeding ambient air (311) in the direction of the aforementioned outlet. Each second feed line (306 a-f) is herein connected to a separate textile dryer (320 a-f).

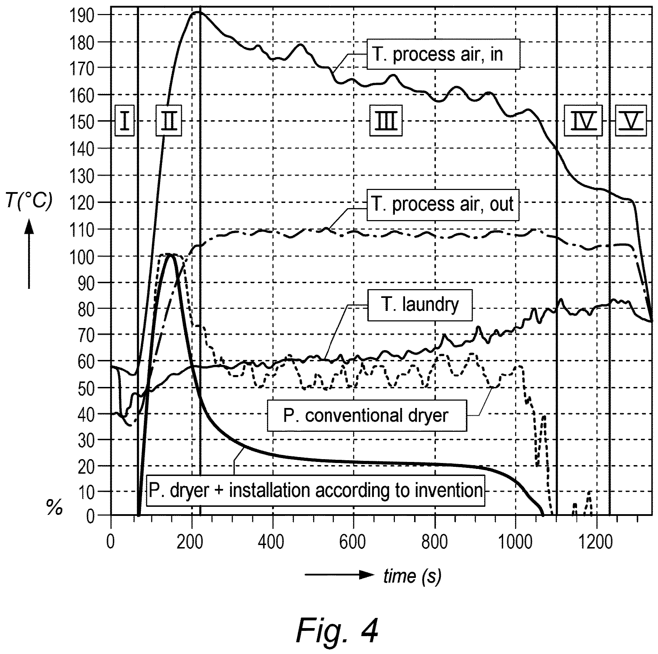

Figure 4 shows a graph in which several phases of a drying process of an industrial textile dryer are represented. The x-axis herein shows the time represented in seconds. The y-axis shows both a temperature in degrees Celsius, ranging from 0 to 190 degrees, and a power in percent, ranging from 0 to 100 percent. The graph represents the temperatures of respectively inbound process air into the drum (Tprocess air, in), outbound process air out of the drum (Tprocess air, out), and of the laundry in the drum (T, laundry) during the various drying phases during a drying process. The percentage on the y-axis indicates the percent of maximum power at which the process air heating device is operating. A percentage of 100% herein indicates that the process air heating device is operating at maximum power. For the shown example, the process air heating device comprises a gas-fired burner. The figure represents two lines which belong to the power-axis, these being respectively the power at which the burner of a conventional textile dryer operates during a drying process (P, conventional dryer) and the power at which the burner of a textile dryer operates in combination with an installation according to the present invention (P, dryer + installation according to the invention). The process of drying laundry by means of an industrial textile dryer can be substantially sub-divided into five phases, viz. phases I, II, III, IV and V. The various phases are represented in Figure 4. Because the drying process in the textile dryer principle not altered by use of an installation according to the invention, the shown temperatures are of application for both the conventional drying process and for the textile dryer which is connected to an installation according to the invention. The power at which the burner must operate during the drying process differs considerably, however. In a textile dryer which is not provided with an installation according to the invention, the process air heating device operates during the drying phase (phase III) at high power (> 50%). The use of an installation according to the present invention considerably reduces the required power at which the process air heating device must operate, wherein the process air heating device is on average in operation only to a measure of 20% (at low load). The reduction in output of the process air heating device will result in a considerable reduction of the energy consumption of the textile dryer.

In the paragraphs below, the phases of the drying process are described and it is indicated how the supply of combustion gases and ambient air is regulated for a textile dryer in combination with an installation according to the present invention.

### Phase I:

The process starts in the first phase with the cleaning (purging) of the burner of the textile dryer. In this phase, the burner starts up, wherein the combustion chamber is first purged before ignition takes place. During this phase, the feed air which is supplied to the feed opening of the textile dryer will consist of 100% ambient air, and no recirculation of process air into the textile dryer will take place.

### Phase II

Next, in the second phase, the gas-fired burner will be ignited, and the burner will be set at maximum combustion (100%). The burner will continue to burn at maximum and deliver a maximum heat input until the desired inlet temperature of process air (Tprocess air, in) of the textile dryer is reached. During the second phase, the air recirculation mechanism will preferably be between 70 and 80% closed. This means that feed air will have to be supplied. Preferably, this feed air substantially fully consists of combustion gases of the gas turbine.

### Phase III

If the desired inlet temperature of the inbound process air has been reached, the drying phase will begin. The burner can herein burn at low load (+- 20%). It can be seen in the figure that the burner, in combination with an installation according to the invention, operates at a significantly lower power (P,dryer + installation according to invention) than a conventional textile dryer (P,conventional dryer). In this phase, the air recirculation mechanism will likewise preferably be between 70 and 80% closed. Preferably, the feed air consists almost 100% of combustion gases of the gas turbine. However, it is possible that a fraction of ambient air is added to the feed air in order to reduce the temperature of the feed air, to lower the air humidity, and/or if the supply of ambient air is required for the burner.

The temperature of the laundry (T, laundry) in the textile dryer can be measured, for example, by an infrared sensor, which measures the current temperature of the the product to be dried, for example textile. If the temperature of the laundry is around 77 to 78 degrees Celsius, it is sufficiently dry. A possible air flow through the textile dryer during this phase is 1500-2000 m3/hr.

### Phase IV

The fourth phase represents the diffusion time at the end of the drying process. During this phase, use is made of the latent heat in the textile and/or the textile dryer. The burner is herein active at low load.

### Phase V

The fifth phase is the cooling phase. In order to get the textile to the desired temperature, the textile needs to be cooled. The feed air will hence almost exclusively consist of ambient air and the air recirculation mechanism will be at fully open, so that no recirculation of process air takes place. During this phase, the burner will be switched off. A possible air flow through the textile dryer during this phase is 7000- 8000 m3/hr.

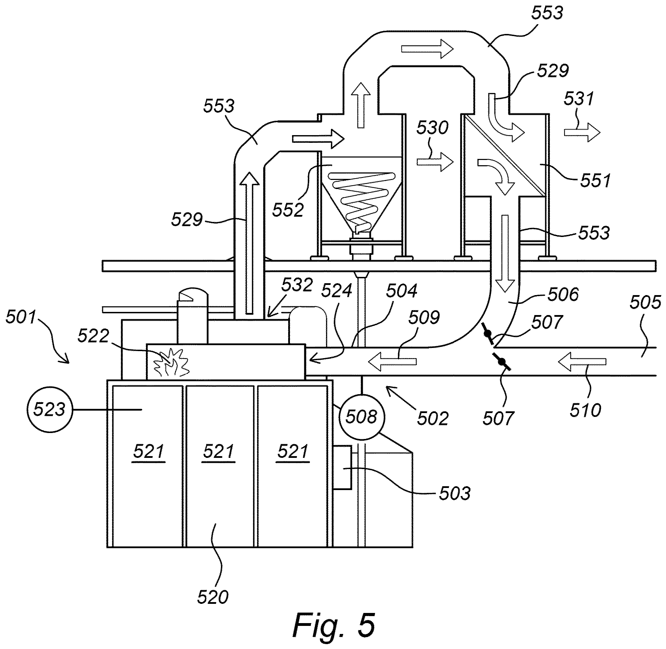

Figure 5 shows a schematic representation of an assembly comprising a textile dryer (520) and an installation (501) according to the invention, in a third embodiment. The textile dryer (520) comprises a treatment chamber (521) for holding laundry (not shown), and a process air heating device (522) for heating process air to be conducted into the treatment chamber (521). In the shown design variant, the textile dryer (520) is a so-called finisher (520). The installation (520) has a primary temperature sensor (523) for measuring the temperature of process air conducted through the textile dryer (520) and/or the temperature of the laundry. The device comprises an air feed device (502) for feeding feed air (509) to the air feed opening (524) of the textile dryer (520). The air feed device (502) comprises an outlet (504) arranged to connect to the air feed opening (524) of the textile dryer (520), and a first feed line (505) for feeding combustion gases (510) produced by a gas turbine (not shown), at a first temperature, in the direction of the at least one outlet (504). The air feed device (502) also comprises a second feed line (506) for feeding ambient air, at a second temperature, in the direction of the at least one outlet (504), and a regulating mechanism (507) for regulating the quantity of combustion gases (510) and/or ambient air which is to be conducted as feed air (509) via the at least one outlet (504) to the feed opening (524). The device (501) further comprises a first secondary temperature sensor (508) for measuring the temperature of feed air (509) to be conducted via the outlet (504) into the feed opening (524). The device (501) further comprises an external control unit (503) arranged to determine a desired temperature of feed air (509) and to regulate the temperature of the feed air (509) by activating the regulating mechanism (507) on the basis of the temperature measured by the primary temperature sensor (523), and/or the current heating capacity of the process air heating device (522), and/or the temperature measured by the first secondary temperature sensor (508). The air feed device (502) further comprises a recirculation line (553), which recirculation line (553), on the one hand, is arranged to connect to an air vent (532) of the textile dryer (520) and, on the other hand, is arranged to connect, with the interposition of at least one air filter (552), in particular a cyclone (552), and a heat exchanger (551), to the first feed line (506). The cyclone (552) ensures that cleaning of the air (529) takes place. The heat exchanger (551) is arranged to deliver heat from the evacuation air (529) deriving from the textile dryer (520) to sucked-up ambient air (530). The ambient air (530) sucked up through the heat exchanger (551) will be heated by heat exchange with the evacuation air (529), whereafter the heated ambient air (511) conducted in the direction of the outlet (504) of the air feed device (502). Following the heat exchange, the evacuation air (529) will be delivered in cooled state (531) to the environment.

It should be clear that the invention is not limited to the illustrative embodiments which are represented and described here, but that, within the scope of the appended claims, countless variants are possible which will be evident to the person skilled in the art. It is herein conceivable that various inventive concepts and/or technical measures of the above-described design variants can be combined in fully or in part, without departing from that inventive concept which is described in the appended claims.

## Claims

1. System comprising an installation (101, 201, 301, 501) for interaction with at least one industrial textile dryer for laundry, and at least one industrial textile dryer coupled to the installation, wherein the textile dryer (120, 220, 320a-320f, 520) comprises: a treatment chamber (121, 221, 321a-321f) for holding laundry, a process air heating device (122, 222, 522) for heating process air (128, 125) to be conducted into the treatment chamber (121, 221, 321a-321f), and an air feed opening (124, 224, 524) for sucking up air into the textile dryer (120, 220, 320a-320f, 520),
wherein the installation (101, 201, 301, 501) and/or the textile dryer (120, 220, 320a-320f, 520) comprises at least one primary temperature sensor (123, 131, 141, 223, 231, 241) for measuring the temperature of process air (126, 226) conducted through the textile dryer (120, 220, 320a-320f, 520) and/or the temperature of the laundry,
the installation (101, 201, 301, 501) further comprising:
- at least one air feed device (102, 202, 302a-302f, 502) for feeding feed air (109, 209, 509) to the air feed opening (124, 224, 524) of at least one textile dryer (120, 220, 320a-320f, 520), comprising:
∘ at least one outlet (104, 204, 504) connected to the air feed opening (124, 224, 524) of the textile dryer (120, 220, 320a-320f, 520),
∘ a first feed line (105, 205, 305a-305f, 505) for feeding combustion gases (110, 210, 510) produced by a gas turbine (340), at a first temperature, in the direction of the at least one outlet (104, 204, 504),
∘ a second feed line (106, 206, 306a-306f, 506) for feeding ambient air (111, 211, 311, 511), at a second temperature, in the direction of the at least one outlet,
∘ a regulating mechanism (107, 207, 507) for regulating the quantity of combustion gases (110, 210, 510), and/or ambient air (111, 211, 311, 511), to be conducted as feed air via the at least one outlet (104, 204, 504) to the feed opening (124, 224, 524),
∘ a first secondary temperature sensor (108, 208, 508) for measuring the temperature of feed air (109, 209, 509) to be conducted via the outlet (104, 204, 504) into the feed opening (124, 224, 524); and
- at least one external control unit (103, 203, 303a-303f, 503) arranged:
∘ to determine a desired temperature of feed air (109, 209) and to regulate the temperature of the feed air (109, 209, 509), by activating the regulating mechanism (107, 207, 507), on the basis of:
▪ the temperature measured by the at least one primary temperature sensor (123, 131, 141, 223, 231, 241), and/or
▪ the current heating capacity of the process air heating device (122, 222, 522); and
∘ preferably to check the current temperature of the feed air (109, 209, 509) by comparing this current temperature measured by the first secondary temperature sensor (108, 208, 508) with the desired temperature of feed air (109, 209, 509), determined by the external control unit (103, 203, 303a-303f, 503), and preferably to readjust the regulating mechanism (107, 207, 507) whenever a predefined maximum temperature difference between the desired temperature and the measured temperature of the feed air is exceeded.

2. System according to claim 1, wherein a first primary temperature sensor (123, 223, 523) is arranged to measure the temperature of process air (126, 226) conducted out of the treatment chamber (121, 221, 321a-321f).

3. System according to claim 1 or 2, wherein a second primary temperature sensor (131, 231) is arranged to measure the temperature of process air (125, 128, 225, 228) to be conducted into the treatment chamber (121, 221, 321a-321f).

4. System according to one of the preceding claims, wherein a third primary temperature sensor (141, 241) is arranged to measure the temperature of the laundry, wherein the third primary temperature sensor (141, 241) concerns an infrared sensor for measuring the temperature of the laundry.

5. System according to one of the preceding claims, wherein the regulating mechanism (107, 207, 507) comprises at least one shut-off valve operable by the external control unit, wherein the at least one shut-off valve operable by the external control unit is accommodated in at least one feed line.

6. System according to one of the preceding claims, wherein the first feed line (205) for combustion gases and the second feed line (206) for ambient air are connected to a mixing chamber (235), wherein the mixing chamber is provided with one central outlet (204) arranged for coupling to the feed opening (224) of the textile dryer (220).

7. System according to one of the preceding claims, wherein the installation (301) comprises a plurality of air feed devices (302a-302f) and a plurality of external control units (303a-303f), wherein each external control unit is coupled to an air feed device (302a-302f) for interaction with a textile dryer (320a-320f).

8. System according to one of the preceding claims, wherein the at least one air feed device (302a-302f) is arranged for simultaneous interaction with a plurality of textile dryers (320a-320f), preferably wherein the air feed device (302a-302f) comprises a plurality of first feed lines (305a-305f) and a plurality of second feed lines (306a-306f), wherein each assembly comprising a first feed line (305a-305f) and a second feed line (306a-306f) is arranged to interact with a separate textile dryer (320a-320f).

9. System according to one of the preceding claims, wherein the installation (301) comprises at least one first air feed distribution line (333), which first air feed distribution line (333) is arranged to connect to a gas turbine vent for combustion gases, and which first air feed distribution line is connected to the at least one first feed line (305a-305f), and preferably to a plurality of first feed lines (305a-305f).

10. System according to claim 9, wherein the installation (301) comprises a plurality of second feed lines (306a-306f), wherein each second feed line (306a-306f) is arranged to feed ambient air, at a second temperature, in the direction of at least one outlet.

11. System according to one of the preceding claims, wherein the at least one external control unit (103, 203, 303a-303f, 503) is arranged to determine a desired temperature of feed air and to regulate the temperature of the feed air by activating the regulating mechanism (107, 207, 507) on the basis of the temperature measured by the first secondary temperature sensor (108, 208, 508).

12. System according to one of the claims 1-11, comprising a plurality of industrial textile dryers (320a-320f) coupled to the installation (301).

13. Method for drying laundry, for example textile, through the use of a system according to one of the claims 1-12, comprising the steps:
A) the measurement of the temperature of process air conducted through the textile dryer (120, 220, 320a-320f, 520) and/or the temperature of the laundry by means of at least one primary temperature sensor (123, 131, 141, 223, 231, 241), and/or the observation of the current heating capacity of the process air heating device (122, 222, 522);
B) the determination, by the external control unit of the installation (101, 201, 301, 501), of the desired temperature of feed air to be sucked up through the textile dryer, on the basis of the temperature measured under step A) and/or the observed current heating capacity;
C) the activation of the regulating mechanism (107, 207, 507) by the external control unit of the installation (101, 201, 301, 501) such that the temperature of feed air to be sucked up through the textile dryer substantially conforms to the temperature determined during step B), wherein preferably the temperature of the feed air is measured by means of the first secondary temperature sensor (108, 208, 508),
D) the sucking-up of feed air through the textile dryer (120, 220, 320a-320f, 520) via the air feed opening; and
E) the feeding of process air to the treatment chamber (121, 221, 321a-321f) of the textile dryer (120, 220, 320a-320f) for the drying of the laundry.

## Patentansprüche

1. System, das eine Anlage (101, 201, 301, 501) für die Interaktion mit mindestens einem industriellen Textiltrockner für Wäsche und mindestens einem mit der Anlage gekoppelten industriellen Textiltrockner umfasst, wobei der Textiltrockner (120, 220, 320a-320f, 520) umfasst: eine Behandlungskammer (121, 221, 321a-321f) zum Aufnehmen von Wäsche, eine Prozessluftheizvorrichtung (122, 222, 522) zum Erwärmen von in die Behandlungskammer (121, 221, 321a-321f) zu leitender Prozessluft (128, 125) und eine Luftzufuhröffnung (124, 224, 524) zum Ansaugen von Luft in den Textiltrockner (120, 220, 320a-320f, 520), wobei die Anlage (101, 201, 301, 501) und/oder der Textiltrockner (120, 220, 320a-320f, 520) mindestens einen primären Temperatursensor (123, 131, 141, 223, 231, 241) zum Messen der Temperatur der durch den Textiltrockner (120, 220, 320a-320f, 520) geleiteten Prozessluft (126, 226) und/oder der Temperatur der Wäsche umfasst,
wobei die Anlage (101, 201, 301, 501) ferner umfasst:
- mindestens eine Luftzufuhrvorrichtung (102, 202, 302a-302f, 502) zum Zuführen von Zufuhrluft (109, 209, 509) zu der Luftzufuhröffnung (124, 224, 524) mindestens eines Textiltrockners (120, 220, 320a-320f, 520), umfassend:
∘ mindestens einen mit der Luftzufuhröffnung (124, 224, 524) des Textiltrockners (120, 220, 320a-320f, 520) verbundenen Auslass (104, 204, 504),
∘ eine erste Zufuhrleitung (105, 205, 305a-305f, 505) zum Zuführen von Verbrennungsgasen (110, 210, 510), die von einer Gasturbine (340) mit einer ersten Temperatur erzeugt werden, in Richtung des mindestens einen Auslasses (104, 204, 504),
∘ eine zweite Zufuhrleitung (106, 206, 306a-306f, 506) zum Zuführen von Umgebungsluft (111, 211, 311, 511) mit einer zweiten Temperatur in Richtung des mindestens einen Auslasses,
∘ einen Regelmechanismus (107, 207, 507) zum Regeln der Menge an Verbrennungsgasen (110, 210, 510) und/oder Umgebungsluft (111, 211, 311, 511), die als Zufuhrluft über den mindestens einen Auslass (104, 204, 504) zu der Zufuhröffnung (124, 224, 524) geleitet werden soll,
o einen ersten sekundären Temperatursensor (108, 208, 508) zum Messen der Temperatur der Zufuhrluft (109, 209, 509), die über den Auslass (104, 204, 504) in die Zufuhröffnung (124, 224, 524) geleitet werden soll; und
- mindestens eine externe Steuereinheit (103, 203, 303a-303f, 503), die eingerichtet ist:
∘ um eine gewünschte Temperatur der Zufuhrluft (109, 209) zu bestimmen und die Temperatur der Zufuhrluft (109, 209, 509) durch Aktivieren des Regelmechanismus (107, 207, 507) zu regeln auf der Grundlage von:
▪ der von dem mindestens einen primären Temperatursensor (123, 131, 141, 223, 231, 241) gemessenen Temperatur und/oder
▪ der aktuellen Heizleistung der Prozessluftheizvorrichtung (122, 222, 522); und
∘ um bevorzugt die aktuelle Temperatur der Zufuhrluft (109, 209, 509) durch Vergleichen dieser von dem ersten sekundären Temperatursensor (108, 208, 508) gemessenen aktuellen Temperatur mit der von der externen Steuereinheit (103, 203, 303a-303f, 503) bestimmten gewünschten Temperatur der Zufuhrluft (109, 209, 509) zu prüfen und bevorzugt den Regelmechanismus (107, 207, 507) nachzustellen, sobald eine vordefinierte maximale Temperaturdifferenz zwischen der gewünschten Temperatur und der gemessenen Temperatur der Zufuhrluft überschritten wird.

2. System nach Anspruch 1, wobei ein erster primärer Temperatursensor (123, 223, 523) dazu eingerichtet ist, die Temperatur der aus der Behandlungskammer (121, 221, 321a-321f) herausgeleiteten Prozessluft (126, 226) zu messen.

3. System nach Anspruch 1 oder 2, wobei ein zweiter primärer Temperatursensor (131, 231) dazu eingerichtet ist, die Temperatur der Prozessluft (125, 128, 225, 228), die in die Behandlungskammer (121, 221, 321a-321f) geleitet werden soll, zu messen.

4. System nach einem der vorhergehenden Ansprüche, wobei ein dritter primärer Temperatursensor (141, 241) dazu eingerichtet ist, die Temperatur der Wäsche zu messen, wobei der dritte primäre Temperatursensor (141, 241) einen Infrarotsensor zum Messen der Temperatur der Wäsche betrifft.

5. System nach einem der vorhergehenden Ansprüche, wobei der Regelmechanismus (107, 207, 507) mindestens ein Absperrventil umfasst, das von der externen Steuereinheit betätigbar ist, wobei das mindestens eine von der externen Steuereinheit betätigbare Absperrventil in mindestens einer Zufuhrleitung aufgenommen ist.

6. System nach einem der vorhergehenden Ansprüche, wobei die erste Zufuhrleitung (205) für Verbrennungsgase und die zweite Zufuhrleitung (206) für Umgebungsluft mit einer Mischkammer (235) verbunden sind, wobei die Mischkammer mit einem zentralen Auslass (204) versehen ist, der zum Koppeln mit der Zufuhröffnung (224) des Textiltrockners (220) eingerichtet ist.

7. System nach einem der vorhergehenden Ansprüche, wobei die Anlage (301) eine Vielzahl von Luftzufuhrvorrichtungen (302a-302f) und eine Vielzahl von externer Steuereinheiten (303a-303f) umfasst, wobei jede externe Steuereinheit mit einer Luftzufuhrvorrichtung (302a-302f) für die Interaktion mit einem Textiltrockner (320a-320f) gekoppelt ist.

8. System nach einem der vorhergehenden Ansprüche, wobei die mindestens eine Luftzufuhrvorrichtung (302a-302f) für die gleichzeitige Interaktion mit einer Vielzahl von Textiltrocknern (320a-320f) eingerichtet ist, wobei die Luftzufuhrvorrichtung (302a-302f) bevorzugt eine Vielzahl von ersten Zufuhrleitungen (305a-305f) und eine Vielzahl von zweiten Zufuhrleitungen (306a-306f) umfasst, wobei jede Baugruppe, die eine erste Zufuhrleitung (305a-305f) und eine zweite Zufuhrleitung (306a-306f) umfasst, dazu eingerichtet ist, mit einem separaten Textiltrockner (320a-320f) zu interagieren.

9. System nach einem der vorhergehenden Ansprüche, wobei die Anlage (301) mindestens eine erste Luftzufuhrverteilerleitung (333) umfasst, wobei die erste Luftzufuhrverteilerleitung (333) dazu eingerichtet ist, mit einer Gasturbinenentlüftung für Verbrennungsgase verbunden zu werden, und wobei die erste Luftzufuhrverteilerleitung mit der mindestens einen ersten Zufuhrleitung (305a-305f) und bevorzugt mit einer Vielzahl von ersten Zufuhrleitungen (305a-305f) verbunden ist.

10. System nach Anspruch 9, wobei die Anlage (301) eine Vielzahl von zweiten Zufuhrleitungen (306a-306f) umfasst, wobei jede zweite Zufuhrleitung (306a-306f) dazu eingerichtet ist, Umgebungsluft mit einer zweiten Temperatur in Richtung mindestens eines Auslasses zuzuführen.

11. System nach einem der vorhergehenden Ansprüche, wobei die mindestens eine externe Steuereinheit (103, 203, 303a-303f, 503) dazu eingerichtet ist, eine gewünschte Temperatur der Zufuhrluft zu bestimmen und die Temperatur der Zufuhrluft durch Aktivieren des Regelmechanismus (107, 207, 507) auf der Grundlage der von dem ersten sekundären Temperatursensor (108, 208, 508) gemessenen Temperatur zu regeln.

12. System nach einem der Ansprüche 1-11, das eine Vielzahl von industriellen Textiltrocknern (320a-320f) umfasst, die mit der Anlage (301) gekoppelt sind.

13. Verfahren zum Trocknen von Wäsche, beispielsweise Textilien, unter Verwendung eines Systems nach einem der Ansprüche 1-12, das die folgenden Schritte umfasst:
A) die Messung der Temperatur der durch den Textiltrockner (120, 220, 320a-320f, 520) geleiteten Prozessluft und/oder der Temperatur der Wäsche mittels mindestens eines primären Temperatursensors (123, 131, 141, 223, 231, 241) und/oder die Beobachtung der aktuellen Heizleistung der Prozessluftheizeinrichtung (122, 222, 522);
B) die Bestimmung, durch die externe Steuereinheit der Anlage (101, 201, 301, 501), der gewünschten Temperatur der durch den Textiltrockner anzusaugenden Zufuhrluft auf der Grundlage der unter Schritt A) gemessenen Temperatur und/oder der beobachteten aktuellen Heizleistung;
C) die Aktivierung des Regelmechanismus (107, 207, 507) durch die externe Steuereinheit der Anlage (101, 201, 301, 501) derart, dass die Temperatur der durch den Textiltrockner anzusaugenden Zufuhrluft im Wesentlichen der im Schritt B) bestimmten Temperatur entspricht, wobei bevorzugt die Temperatur der Zufuhrluft mittels des ersten sekundären Temperatursensors (108, 208, 508) gemessen wird,
D) das Ansaugen von Zufuhrluft durch den Textiltrockner (120, 220, 320a-320f, 520) über die Luftzufuhröffnung; und
E) das Zuführen von Prozessluft zu der Behandlungskammer (121, 221, 321a-321f) des Textiltrockners (120, 220, 320a-320f) zum Trocknen der Wäsche.

## Revendications

1. Système comprenant une installation (101, 201, 301, 501) destinée à interagir avec au moins un sèche-linge industriel pour textiles destiné au linge, et au moins un sèche-linge industriel pour textiles couplé à l'installation, dans lequel le sèche-linge pour textiles (120, 220, 320a-320f, 520) comprend: une chambre de traitement (121, 221, 321a-321f) destinée à contenir le linge, un dispositif de chauffage d'air de traitement (122, 222, 522) destiné à chauffer l'air de traitement (128, 125) à conduire dans la chambre de traitement (121, 221, 321a-321f), et une ouverture d'alimentation en air (124, 224, 524) destinée à aspirer l'air dans le sèche-linge pour textiles (120, 220, 320a-320f, 520),
dans lequel l'installation (101, 201, 301, 501) et/ou le sèche-linge pour textiles (120, 220, 320a-320f, 520) comprend au moins un capteur de température principal (123, 131, 141, 223, 231, 241) destiné à mesurer la température de l'air de traitement (126, 226) conduit à travers le sèche-linge pour textiles (120, 220, 320a-320f, 520) et/ou la température du linge,
l'installation (101, 201, 301, 501) comprenant en outre :
- au moins un dispositif d'alimentation en air (102, 202, 302a-302f, 502) pour alimenter en air d'alimentation (109, 209, 509) l'ouverture d'alimentation en air (124, 224, 524) d'au moins un sèche-linge pour textiles (120, 220, 320a-320f, 520), comprenant :
∘ au moins une sortie (104, 204, 504) raccordée à l'ouverture d'alimentation en air (124, 224, 524) du sèche-linge pour textiles (120, 220, 320a-320f, 520),
∘ une première conduite d'introduction (105, 205, 305a-305f, 505) destinée à introduire des gaz de combustion (110, 210, 510) produits par une turbine à gaz (340), à une première température, en direction de l'au moins une sortie (104, 204, 504),
∘ une seconde conduite d'introduction (106, 206, 306a-306f, 506) destinée à introduire l'air ambiant (111, 211, 311, 511), à une seconde température, en direction de l'au moins une sortie,
∘ un mécanisme de régulation (107, 207, 507) destiné à réguler la quantité de gaz de combustion (110, 210, 510) et/ou d'air ambiant (111, 211, 311, 511), à conduire en tant qu'air d'alimentation par l'intermédiaire de l'au moins une sortie (104, 204, 504) vers l'ouverture d'alimentation (124, 224, 524),
∘ un premier capteur de température secondaire (108, 208, 508) destiné à mesurer la température de l'air d'alimentation (109, 209, 509) à conduire par l'intermédiaire de la sortie (104, 204, 504) dans l'ouverture d'alimentation (124, 224, 524) ; et
- au moins une unité de commande externe (103, 203, 303a-303f, 503) conçue :
∘ pour déterminer une température souhaitée de l'air d'alimentation (109, 209) et pour réguler la température de l'air d'alimentation (109, 209, 509), en activant le mécanisme de régulation (107, 207, 507), sur la base de :
▪ la température mesurée par l'au moins un capteur de température principal (123, 131, 141, 223, 231, 241), et/ou
▪ la capacité de chauffage actuelle du dispositif de chauffage d'air de traitement (122, 222, 522) ; et
∘ de préférence pour vérifier la température actuelle de l'air d'alimentation (109, 209, 509) en comparant cette température actuelle mesurée par le premier capteur de température secondaire (108, 208, 508) avec la température souhaitée de l'air d'alimentation (109, 209, 509), déterminée par l'unité de commande externe (103, 203, 303a-303f, 503), et de préférence pour réajuster le mécanisme de régulation (107, 207, 507) chaque fois qu'une différence de température maximale prédéfinie entre la température souhaitée et la température mesurée de l'air d'alimentation est dépassée.

2. Système selon la revendication 1, dans lequel un premier capteur de température principal (123, 223, 523) est conçu pour mesurer la température de l'air de traitement (126, 226) évacué de la chambre de traitement (121, 221, 321a-321f).

3. Système selon la revendication 1 ou 2, dans lequel un deuxième capteur de température principal (131, 231) est conçu pour mesurer la température de l'air de traitement (125, 128, 225, 228) à introduire dans la chambre de traitement (121, 221, 321a-321f).

4. Système selon l'une des revendications précédentes, dans lequel un troisième capteur de température principal (141, 241) est conçu pour mesurer la température du linge, dans lequel le troisième capteur de température principal (141, 241) se rapporte à un capteur infrarouge pour mesurer la température du linge.

5. Système selon l'une des revendications précédentes, dans lequel le mécanisme de régulation (107, 207, 507) comprend au moins une vanne d'arrêt actionnable par l'unité de commande externe, dans lequel l'au moins une vanne d'arrêt actionnable par l'unité de commande externe est logée dans au moins une conduite d'alimentation.

6. Système selon l'une des revendications précédentes, dans lequel la première conduite d'alimentation (205) destinée aux gaz de combustion et la seconde conduite d'alimentation (206) destinée à l'air ambiant sont raccordées à une chambre de mélange (235), dans lequel la chambre de mélange est dotée d'une sortie centrale (204) conçue pour être couplée à l'ouverture d'alimentation (224) du sèche-linge pour textiles (220).

7. Système selon l'une des revendications précédentes, dans lequel l'installation (301) comprend une pluralité de dispositifs d'alimentation en air (302a-302f) et une pluralité d'unités de commande externes (303a-303f), dans lequel chaque unité de commande externe est couplée à un dispositif d'alimentation en air (302a-302f) en vue d'une interaction avec un sèche-linge pour textiles (320a-320f).

8. Système selon l'une des revendications précédentes, dans lequel l'au moins un dispositif d'alimentation en air (302a-302f) est conçu pour une interaction simultanée avec une pluralité de sèche-linges pour textiles (320a-320f), de préférence dans lequel le dispositif d'alimentation en air (302a-302f) comprend une pluralité de premières conduites d'alimentation (305a-305f) et une pluralité de secondes conduites d'alimentation (306a-306f), dans lequel chaque ensemble comprenant une première conduite d'alimentation (305a-305f) et une seconde conduite d'alimentation (306a-306f) est conçu pour interagir avec un sèche-linge pour textiles distinct (320a-320f).

9. Système selon l'une des revendications précédentes, dans lequel l'installation (301) comprend au moins une première conduite de distribution d'alimentation en air (333), laquelle première conduite de distribution d'alimentation en air (333) est conçue pour être raccordée à un évent de turbine à gaz pour les gaz de combustion, et laquelle première conduite de distribution d'alimentation en air est raccordée à l'au moins une première conduite d'alimentation (305a-305f), et de préférence à une pluralité de premières conduites d'alimentation (305a-305f).

10. Système selon la revendication 9, dans lequel l'installation (301) comprend une pluralité de secondes conduites d'alimentation (306a-306f), dans lequel chaque seconde conduite d'alimentation (306a-306f) est conçue pour alimenter en air ambiant, à une seconde température, en direction d'au moins une sortie.

11. Système selon l'une des revendications précédentes, dans lequel l'au moins une unité de commande externe (103, 203, 303a-303f, 503) est conçue pour déterminer une température souhaitée de l'air d'alimentation et pour réguler la température de l'air d'alimentation en activant le mécanisme de régulation (107, 207, 507) sur la base de la température mesurée par le premier capteur de température secondaire (108, 208, 508).

12. Système selon l'une des revendications 1-11, comprenant une pluralité de sèche-linges industriels pour textiles (320a-320f) couplés à l'installation (301).

13. Procédé de séchage du linge, par exemple du textile, en utilisant un système selon l'une des revendications 1-12, comprenant les étapes suivantes :
A) la mesure de la température de l'air de traitement conduit à travers le sèche-linge pour textiles (120, 220, 320a-320f, 520) et/ou la température du linge au moyen d'au moins un capteur de température principal (123, 131, 141, 223, 231, 241), et/ou l'observation de la capacité de chauffage actuelle du dispositif de chauffage d'air de traitement (122, 222, 522) ;
B) la détermination, par l'unité de commande externe de l'installation (101, 201, 301, 501), de la température souhaitée de l'air d'alimentation à aspirer à travers le sèche-linge pour textiles, sur la base de la température mesurée à l'étape A) et/ou de la capacité de chauffage actuelle observée ;
C) l'activation du mécanisme de régulation (107, 207, 507) par l'unité de commande externe de l'installation (101, 201, 301, 501) de sorte que la température de l'air d'alimentation à aspirer à travers le sèche-linge pour textiles soit sensiblement conforme à la température déterminée au cours de l'étape B), où de préférence la température de l'air d'alimentation est mesurée au moyen du premier capteur de température secondaire (108, 208, 508),
D) l'aspiration de l'air d'alimentation à travers le sèche-linge pour textiles (120, 220, 320a-320f, 520) par l'intermédiaire de l'ouverture d'alimentation en air ; et
E) l'alimentation en air de traitement de la chambre de traitement (121, 221, 321a-321f) du sèche-linge pour textiles (120, 220, 320a-320f) pour le séchage du linge.
